# EUROPEAN PATENT SPECIFICATION

(11) **EP 1 605 613 B1**
(45) Date of publication and mention of the grant of the patent: **26.09.2007**
(21) Application number: 05012341.3
(22) Date of filing: 08.06.2005
(51) Int. Cl.: H04B 10/10

(54) **Optical signal transmission system and signal transmission method**
Vorrichtung und Verfahren zur optischen Signalübertragung
Dispositif et procédé pour transmission de signal optique

(30) Priority: 10.06.2004 JP 2004172121
(43) Date of publication of application: 14.12.2005
(73) Proprietor: MATSUSHITA ELECTRIC INDUSTRIAL CO., LTD, Kadoma-shi, Osaka 571-8501 (JP)
(72) Inventor: Tsubosaka, Susumu, Sagamihara-shi Kanagawa 228-0818 (JP); Tohgoh, Hitomaro, Yokohama-shi Kanagawa 226-0014 (JP); Kanetaka, Nobuhisa, Machida-shi Tokyo 194-0212 (JP); Yamanaka, Shohei, Yokohama-shi Kanagawa 224-0054 (JP)
(74) Representative: Grünecker, Kinkeldey, Stockmair & Schwanhäusser Anwaltssozietät

(56) References cited:
- EP-A- 0 843 380
- EP-A- 1 173 034
- EP-A- 1 339 179
- EP-A- 1 372 274
- US-A- 5 615 034
- US-B1- 6 504 636

## Description

The present invention relates to a signal transmission system including slave stations each performs radio communication with a portable terminal etc. for example, and a master station coupled to the slave stations through optical transmission paths and also relates to a signal transmission method.

In recent years, in a radio communication system such as a mobile communication system, as a countermeasure for a dead zone area to which a radio signal does not reach, there is a signal transmission system (antenna distribution system) in which a master station is provided on a radio base station side, the master station is coupled to antenna devices (hereinafter called slave stations) through optical transmission paths, and the slave stations cover the communication of dead zone areas, respectively.

Since such a signal transmission system is considered to be used within an apartment house, a building etc., the signal transmission system is desired to be cheap and have many slave stations being coupled.

An example of a transmitting/receiving system comprising a transmitting/receiving station and a plurality of transmitting/receiving devices that are connected to the transmitting/receiving station by optical fibers is described in US-B1 6 504 636. The transmitting/receiving devices comprise an antenna for transmitting/receiving radio frequency signals. The optical transmission paths comprise upstream and downstream links. In particular ones of the plurality of embodiments, an optical divider is provided in the optical transmission path, for optically connecting a plurality of receiving/transmitting devices to a single receiving/transmitting station.

A further wireless communication mobile system is described in EP-A-0 843 380. In the system, a single control station that is connected to public telecommunication networks is optically connected to a plurality of radio base stations. Each radio base station is equipped with an antenna comprising a plurality of antenna elements. In order to transmit the signals between the controller and the different antenna elements of a radio base station via a single downstream and a single upstream link, wavelength multiplexing employing a plurality of different optical pilot frequencies is employed.

An optical transmission system which performs optical communication between a master station and slave stations among which radio communication is performed is described in the JP-A-2001-156720, for example.

However, in such a system, since signals from the slave stations are synthesized, noises of signals received from the respective slave stations are synthesized and so a CNR (carrier to noise ratio) of the synthesized signal is degraded.

Since it is necessary to keep the CNR to a predetermined value or more in order to maintain the communication quality, there is a circumstance that the number of the slave stations within the system, that is, the number of the slave stations to be coupled to the master station is limited.

The invention has been made in view of the aforesaid conventional circumstance and an object of the invention is to provide a signal transmission system which can increase the number of slave stations being coupled with a simple configuration.

This is achieved by the features of the independent claims.

According to the present invention, since the optical transmission characteristics can be improved, the number of the slave stations being coupled can be increased.

It is preferable that the master station includes reference signal generation means for generating the reference signal. According to this configuration, the master station can generate the reference signal.

Further, it is preferable that the reference signal generation means includes signal generation means for generating a signal of a first frequency and reference signal frequency conversion means for converting the first frequency signal into the predetermined frequency signal. According to this configuration, even when the predetermined frequency signal can not be generated, the reference signal for frequency-converting the up signal into a signal of the desired frequency can be generated.

Further, it is preferable that the master station further includes means for receiving the reference signal from the outside. According to this configuration, since the reference signal is received from the outside of the master station, the master station can be miniaturized.

Further, it is preferable that the master station further includes coupling means for frequency-multiplexing and coupling the reference signal with a down signal for the slave station. According to this configuration, the reference signal can be transmitted in a multiplexed manner to the slave station.

Further, it is preferable that the master station further includes means for multiplying the reference signal; and coupling means for frequency-multiplexing and coupling the multiplied reference signal with a down signal for the slave station.

Further, it is preferable that the frequency conversion means for converting the intermediate frequency band signal into the desired frequency band signal is disposed at a rear stage of the synthesizing means for synthesizing the plurality of up signals. According to this configuration, since the frequency conversion is made after synthesizing the up signals, the number of the frequency conversion means can be reduced.

Further, it is preferable that the master station further includes detecting means for detecting a signal level of the up signal; and gain control means for controlling a gain of the amplifying or attenuating means when the detecting means does not detect the up signal. According to this configuration, the power saving and the improvement of the signal quality can be realized by controlling the amplifying or attenuating means when the signal is not received.

Further, it is preferable that the master station further includesabnormality detection means for recognizing that the slave station is abnormal when the signal level of the up signal is detected but the up signal is not detected. According to this configuration, the abnormality of the slave station can be detected.

Further, it is preferable that the master station further includes correction means for absorbing variation of a light reception level of the optical signal received from the optical transmission path. According to this configuration, since the light source element on the transmission side can be adjusted to suitable characteristics, it is possible to realize the optical transmission of higher quality.

According to the invention, it is possible to provide the signal transmission system which can increase the number of slave stations being coupled with a simple configuration
Fig. 1 is a schematic diagram showing the constitution of a signal transmission system for explaining the first embodiment of the invention.
Fig. 2 is a diagram showing an example of the frequency characteristics of the tertiary distortion in the optical transmission.
Fig. 3 is a diagram showing an example of the schematic configuration of an amplifying operation control portion.
Fig. 4 is a diagrams showing the wavelength transmission characteristics of respective wavelength multiplexing types.
Fig. 5 is an explanatory diagram showing a coupling system from a laser diode serving as a light source to an optical fiber as an optical transmission path.
Fig. 6 (a) (b) are diagrams showing examples of the bias current characteristics of the laser diode.
Fig. 7 is a schematic diagram showing the constitution of an up signal transmission system of the signal transmission system for explaining the second exemplary embodiment

### First Embodiment

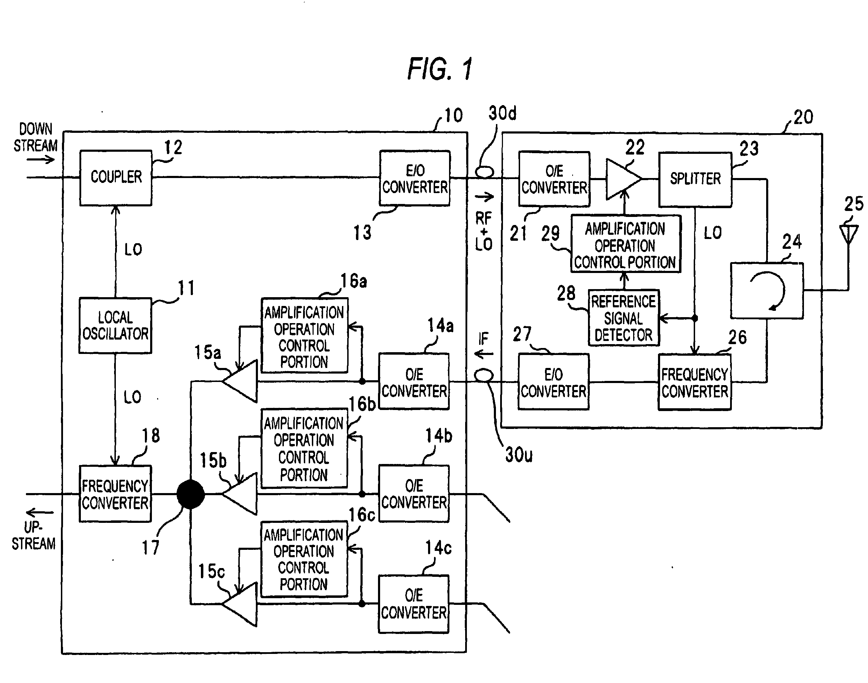

Fig. 1 is a schematic diagram showing the constitution of a signal transmission system for explaining the first embodiment of the invention. This embodiment will be exemplarily explained as to an antenna distribution system applied to a mobile communication system as the signal transmission system.

As shown in Fig. 1, the signal transmission system according to the embodiment includes a master station 10 and slave stations 20 coupled to the master station through optical transmission paths 30. The master station 10 transmits a down signal from a not-shown radio base station to the slave stations 20 and transmits up signals from the slave stations 20 to the radio base station. The slave station 20 has a function as an antenna station and serves to transmit a down signal from the master station 10 to a mobile terminal through an antenna and transmit an up signal from the mobile terminal to the master station 10.

The master station 10 includes a local oscillator 11, a coupler 12, an electro/optical (E/O) converter 13, optical/electro (O/E) converters 14a to 14c, amplification operation control portions 16a to 16c, amplifiers 15a to 15c, a synthesizer 17 and a frequency converter 18.

The local oscillator 11 generates a reference signal of a predetermined frequency. In this respect, the same effects can be obtained even when the reference signal is received from the outside instead of providing the oscillator within the master station. The coupler 12 frequency-multiplexes and couples the reference signal from the local oscillator 11 with the down signal of a radio frequency (RF) band for the slave station 20. The E/O converter 13 converts an electrical signal outputted from the coupler 12 into an optical signal. In this case, when the frequency of the reference signal is smaller than the band width of the radio frequency, for example, when the frequency of the reference signal is 12.8 MHz and the band width of the radio frequency is 20 MHz, if the reference signal is multiplexed with the signal of the radio frequency band, there arises a problem that a secondary distortion component is generated within the transmission band of the radio frequency signal. In such a case, it is desirable to frequency-convert the reference signal by a multiplier (not shown) etc. provided between the local oscillator 11 and the coupler 12 and then to superimpose the signal thus frequency-converted on the radio frequency signal. For example, the secondary harmonics (25.6 MHz) of the reference signal frequency may be superimposed on the radio frequency signal.

Further, at the time of frequency-converting the radio frequency signal of the up signal into the intermediate frequency, if the radio frequency is 2,000 MHz and the intermediate frequency is 500 MHz, it is necessary to input a signal of 1, 500 MHz or 2, 500 MHz to a frequency conversion means. In this case, if the reference signal of 1,500 MHz or 2,500 MHz can not be obtained, a signal of another frequency generated from another oscillator may be used as a reference signal, then this reference signal may be frequency-converted by using a phase synchronizing circuit etc. into a signal of 1,500 MHz or 2,500 MHz and superimposed on the down signal. In this respect, the similar effect can be obtained even in a case that the reference signal is superimposed as it is on the radio frequency signal within the master station, the reference signal is frequency-converted by using a phase synchronizing circuit etc. within the slave station to obtain a signal of 1, 500 MHz or 2,500 MHz and the up signal of the radio frequency is frequency-converted into an intermediate frequency signal by using the frequency-converted signal.

The O/E converters 14a to 14c convert up optical signals sent from the slave stations into electrical signals of an intermediate frequency band, respectively. The amplifiers 15a to 15c amplify the electrical signals from the O/E converters 14a to 14c, respectively. The amplification operation control portions 16a to 16c control the operations of the amplifiers 15a to 15c based on the up signals outputted from the O/E converters 14a to 14c, respectively. In this case, an attenuation operation may be controlled instead of controlling the amplification operation. The synthesizer 17 synthesizes the up signals amplified by the amplifiers 15a to 15c. The frequency converter 18 converts the up signal of the intermediate frequency band applied from the synthesizer 17 into the radio frequency signal by using the reference signal.

For example, when the radio frequency is 2,000 MHz and the intermediate frequency is 500 MHz, it is necessary to input a signal of 1,500 MHz or 2,500 MHz to the frequency converter 18. In this case, if the reference signal of 1,500 MHz or 2,500 MHz can not be obtained, a signal of another frequency generated from another oscillator may be used as a reference signal, then this reference signal may be frequency-converted by using a phase synchronizing circuit etc. to obtain a signal of 1, 500 MHz or 2, 500 MHz and this frequency-converted signal may be inputted into the frequency converter 18. In this case, the frequency of the signal inputted into the frequency converter 18 is made coincide with the frequency of a signal inputted into the frequency converter 26 of the slave station.

The slave station 20 includes an O/E converter 21, an amplifier 22, a branching filter or splitter 23, a circulator 24, an antenna 25, the frequency converter 26, an E/0 converter 27, a reference signal detector 28 and an amplification operation control portion 29.

The O/E converter 21 converts the down signal of the radio frequencymultiplexed with the reference signal, which is received from the master station 10 through an optical transmission path 30d, into an electrical signal from an optical signal. The amplifier 22 amplifies the down electrical signal outputted from the O/E converter 21. The splitter 23 splits or branches the electrical signal supplied from the O/E converter 21 into the radio signal and the reference signal. The circulator 24 sends the down radio signal outputted from the splitter 23 to the antenna 25 and sends the up signal from the antenna 25 to the frequency converter 26.

The frequency converter 26 frequency-converts the up radio signal from the antenna 25 into a signal of the intermediate frequency band. This frequency conversion into the intermediate frequency band is performed by using the reference signal split by the splitter 23. For example, when the radio frequency is 2, 000 MHz and the intermediate frequency is 500 MHz, it is necessary to input a signal of 1, 500 MHz or 2,500 MHz to the frequency converter 26. In this case, if the frequency of the reference signal split by the splitter 23 is not 1,500 MHz nor 2,500 MHz, the reference signal may be frequency-converted by using a phase synchronizing circuit etc. to obtain a signal of 1,500 MHz or 2, 500 MHz and this frequency-converted signal may be inputted into the frequency converter 26. In this case, the frequency of the signal inputted into the frequency converter 26 is made coincide with the frequency of the signal inputted into the frequency converter 18 of the master station. The E/O converter 27 converts an electrical signal outputted from the frequency converter 26 into an optical signal and sends the optical signal to an optical transmission path 30u.

In this manner, in the signal transmission system according to the embodiment, the frequency converter 26 of the slave station 20 converts the up signal into the intermediate frequency band signal from the radio frequency band signal. That is, in the up optical transmission path 30u from the slave station 20 to the master station 10, the signal is transmitted at the intermediate frequency band.

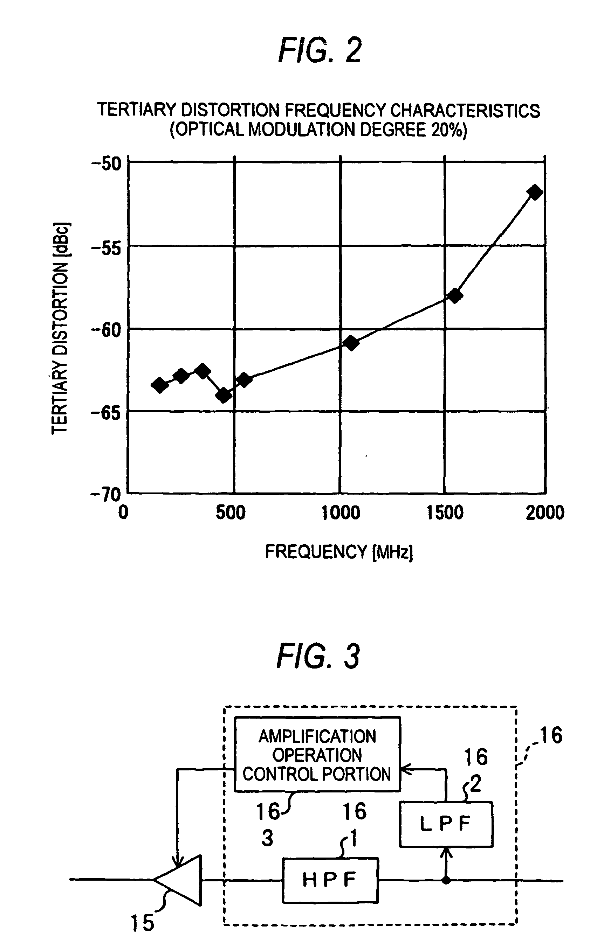

The explanation will be made as to the frequency characteristics of the optical signal in the optical transmission. Fig. 2 is a diagram showing an example of the frequency characteristics of the tertiary distortion in the optical transmission. As shown in Fig. 2, in the optical transmission, the magnitude of distortion tends to increase as the frequency increases. Thus, good distortion characteristics can be obtained in the case of transmitting a signal of the intermediate frequency band of lower frequencies (for example, about 500 MHz) as compared with the case of transmitting a signal of the radio frequency band of higher frequencies (for example, about 2 GHz) . Therefore, since the degree of light modulation can be made large in the intermedi ate frequency band as compared with the radio frequency band, CNR can be improved in the intermediate frequency band.

In this embodiment, since the optical transmission from the slave station 20 to the master station 10 is performed by using the intermediate frequency band as described above, the master station 10 can receive signals of a high CNR from the respective slave stations 20. Further, since a CNR per one slave station 20 is high, the number of signals synthesized by the synthesizer 17 can be made large.

That is, since the optical transmission from the slave stations 20 is performed by the intermediate frequency band, the master station can be coupled to more the slave stations 20 with almost the same signal quality as that after signal synthesizing in the case where the optical transmission is performed by using the radio frequency band.

Next, the synthesizer 17 synthesizes the up signals from the respective slave stations 20 having been converted into the electrical signals by the O/E converters 14a to 14c. Since the synthesizer synthesizes the signals in the form of electrical signals, the generation of beat noises, which is worried about being caused at the time of synthesizing optical signals, can be prevented. Further, in the case of synthesizing the signals in the form of optical signals, it is required to separate from one another the light wavelengths of the light sources for the respective slave stations. However, in this embodiment, since the synthesizer synthesizes the signals having been converted into electrical signals, it is not necessary to differentiate from one another the light wavelengths of the light sources for the respective slave stations.

Further, the synthesizer 17 is provided at the front stage of the frequency converter 18. An electricpart such as an amplifier generally exhibits good characteristics as to distortion characteristics etc. in the low frequency range as compared with the high frequency range. Thus, good signal characteristics can be obtained through such a processing that signals received from the respective slave stations 20 are subjected to the electrical processing such as an amplification processing thereby to be synthesized and then the frequency band of the synthesized signal is converted into the radio frequency band.

In the case of performing the frequency conversion before the synthesizing, it is necessary to provides frequency converters which frequency-convert the received signals from the slave stations, respectively. In contrast, in the embodiment, since the frequency conversion is performed after the synthesizing, it is possible to reduce the number of mixers etc. for the frequency conversion thereby to miniaturize the size of the station and reduce the cost thereof.

The frequency converter 18 performs the frequency conversion by using the reference signal generated from the local oscillator 11. This reference signal is superimposed on the down signal for the slave station 20 at the coupler 12. There arises no problem when the reference signal is inputted from the outside instead of generating it by the local oscillator 11. The frequency converter 26 of the slave station 20 converts the radio frequency signal into the intermediate frequency signal by using the reference signal. Thus, since it is not necessary to provide a local oscillator for frequency conversion at the slave station 20, the configuration of the slave station can be simplified.

Further, the frequency of the reference signal used for the frequency conversion on the master station 10 side can be made common to that used for the frequency conversion on the slave stations 20. side. In the case of using the local oscillator separately in the master station and the slave station, since the frequencies of the reference signals generated from theses local oscillators are required to be made coincide accurately, the local oscillators are required to have high accuracy. On the other hand, according to the embodiment, since the frequencies of the reference signals are common between the master station and the slave stations, it is possible to prevent the trouble due to the deviation of the frequency of the reference signal between the master station and the slave stations.

Incidentally, the same effects can also be obtained in the following case. That is, the local oscillator is provided in each of the slave stations instead of the master station, the up radio frequency signal is frequency-converted into the intermediate frequency signal by using the referenced signal generated from the local oscillator, and the reference signal is super imposed with the intermediate frequency signal and then transmitted to the master station. Then, on the master station side, the reference signal is branched from the signal transmitted from the slave station and then the intermediate frequency signal is frequency-converted into the radio frequency signal by using the referenced signal thus branched.

In the master station 10, the amplification operation control portions 16a to 16c are provided which control the operations of the amplifiers 15a to 15c for amplifying the received signals, respectively.

Fig. 3 is a diagram showing an example of the schematic configuration of the amplifying operation control portion. The amplification operation control portion 16 includes a high pass filter (HPF) 161, a low pass filter (LPH) 162 and an operation switching portion 163. The low frequency component of the up electrical signal outputted from the O/E converter 14 is removed by the high pass filter 161, whilst the d.c. component of the up electrical signal is extracted by the low pass filter 162 provided for d.c. component detection. The operation switching portion 163 has such a function of switching the power supply for the amplifier 15, for example. That is, the operation switching portion confirms the presence or non- presence of the d.c. component and controls the amplifier 15 so as to turn off the operation (power supply) of the amplifier 15 when the signal is not sent from the slave station 20. Thus, for example, when there is a slave station not being used, the operation of the amplifier for this slave station is stopped thereby to save the electric power consumed in the slave station. Further, in this case, the signal synthesized by the synthesizer 17 can be prevented from being degraded in its CNR. Alternatively, when there is a slave station not being used, the signal synthesized by the synthesizer 17 can also be prevented from being degraded in its CNR in a manner that an attenuator is provided in place of the amplifier and the attenuation amount of the attenuator for this slave station is increased.

Other various kinds of the methods can be applied to the embodiment as the method of detecting the signal from the slave station. For example, the embodiment may be configured in a manner that a pilot signal is superimposed on the up signal in the slave station 20, and the amplification operation control portion 16 turns off the power supply of the amplifier 15 when the pilot signal is not detected.

Next, the slave station 20 includes the reference signal detector 28 thereby to make it possible to detect the reference signal superimposed on the down signal. This reference signal is used for the frequency conversion and also may serve as the pilot signal. The reference signal detector 28 monitors the reference signal and detects the disconnection etc. of the optical transmission path in accordance with the presence or non-presence of the reference signal. Thus, it is possible to notify an alarm by means of a not-shown alarm notifying portion (a display portion and a sound output portion) etc. Incidentally, in this case, the down signal (for example, the d.c. component of the down signal) may be detected in place of the reference signal.

The amplification operation control portion 29 controls the power supply for the amplifier 22 of the slave station 20 in accordance with the detection of the reference signal by the reference signal detector 28. For example, in a case where the slave station is not used despite that it is installed or there arises an abnormality such as disconnection of the optical transmission path, the slave station 20 does not detect the reference signal. Thus, the amplification operation control portion 29 turns off the power supply for the amplifier 22, whereby the electric power consumed in the slave station can be saved. Further, a noise signal transmitted from the antenna 25 can be reduced. In this case, a noise signal transmitted from the antenna 25 can also be reduced by increasing the attenuation amount of an attenuator which is used in place of the amplifier in a case where the slave station is not used or there arises an abnormality such as disconnection of the optical transmission path and hence the reference signal is not detected. Incidentally, in this case, the down signal (for example, the d.c. component of the down signal) may be detected in place of the reference signal thereby to perform the aforesaid control in accordance with the detection result of the down signal.

A semiconductor laser such as a Fabry-Perot laser is used as a light source used in the E/O converter 27 of the slave station. Although the Fabry-Perot laser is relatively cheap, it is a laser light source having a relatively wide range in its spectrum center wavelength and the characteristics thereof is degraded than a DFB (Distributed Feedback) laser. However, since the signal transmission system according to this embodiment has excellent distortion characteristics by transmitting the signal at the intermediate frequency from the slave station to the master station, the CNR can be improved by increasing the optical modulation degree of the RF signal. Thus, sufficient signal quality can be obtained even if such a laser is used.

Next, the explanation will be made as to a case where the WDM (Wavelength Division Multiplexing) is performed in which the up and down communications are performed by using a single optical fiber as the optical transmission path 30. In this case, different frequencies (wavelengths) are used between the up and down communications. As the wavelength multiplexing in the WDM, there are the fusion type and the filter type.

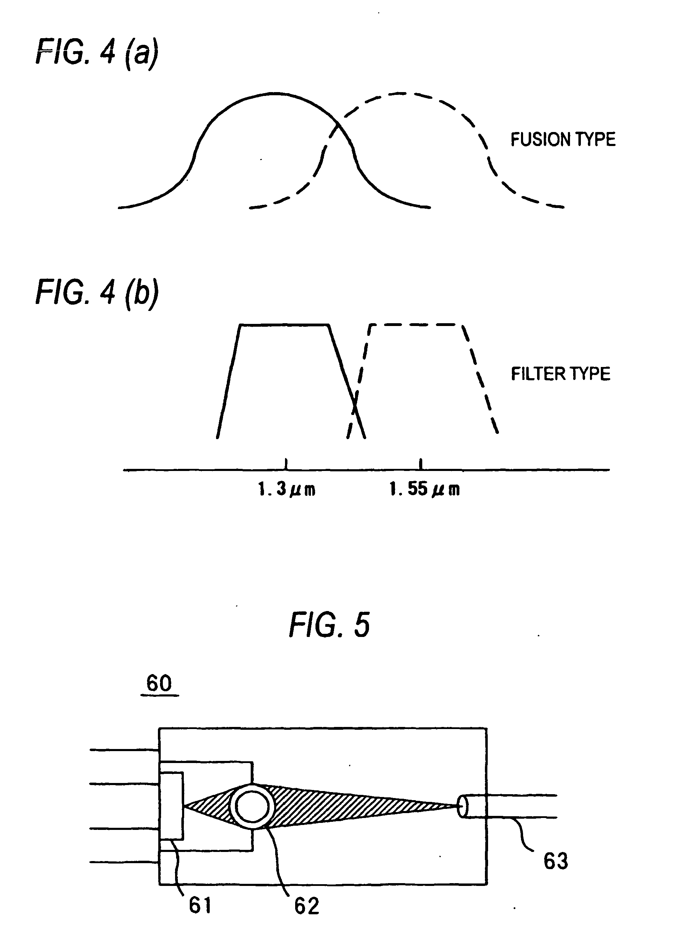

Fig. 4 is diagrams showing the wavelength transmission characteristics of the respective wavelength multiplexing types, in which Fig. 4(a) shows the characteristics of the fusion type and Fig. 4(b) shows the characteristics of the filter type. As shown in Fig. 4 (a), the fusion type is gentle in its wavelength transmission characteristics and has features that the loss becomes large when the wavelength range spreads but the cost is low. In contrast, as shown in Fig. 4 (b), the filter type is steep in its wavelength transmission characteristics and has features that the loss is low in the wide wavelength range but the cost is high.

In the case where the Fabry-Perot laser is used in the WDM, since the center wavelength range of the spectrum is wide as described above, loss becomes large when this laser is used as it is as a light source in the fusion type. Thus, when the Fabry-Perot laser is used so as to limit the wavelength range thereof to a predetermined range, the fusion type WDM of a relatively cheap cost can be realized by a relatively cheap Fabry-Perot laser. The limited wavelength range is in a range of about ± 20nm around the center frequency of the laser, for example.

In the example of Fig. 4, supposing that the frequency of the up signal is 1.31 µm and the frequency of the down signal is 1.55 µm, the Fabry-Perot laser is used for the signal transmission in a manner that the wavelength range thereof is limited to 1.31µm ± 20nm for the up signal and to 1.55 µm ± 20nm for the down signal.

Fig. 5 is an explanatory diagram showing a coupling system from the E/O converter to the optical transmission path, that is, from the laser diode serving as the light source to the optical fiber as the optical transmission path. As shown in Fig. 5, a laser diode 61 emits a laser light in accordance with a current flowing therein. The laser light thus emitted is converged at the optical fiber 63 through a lens 62 and the optical fiber 63 transmits the converged light.

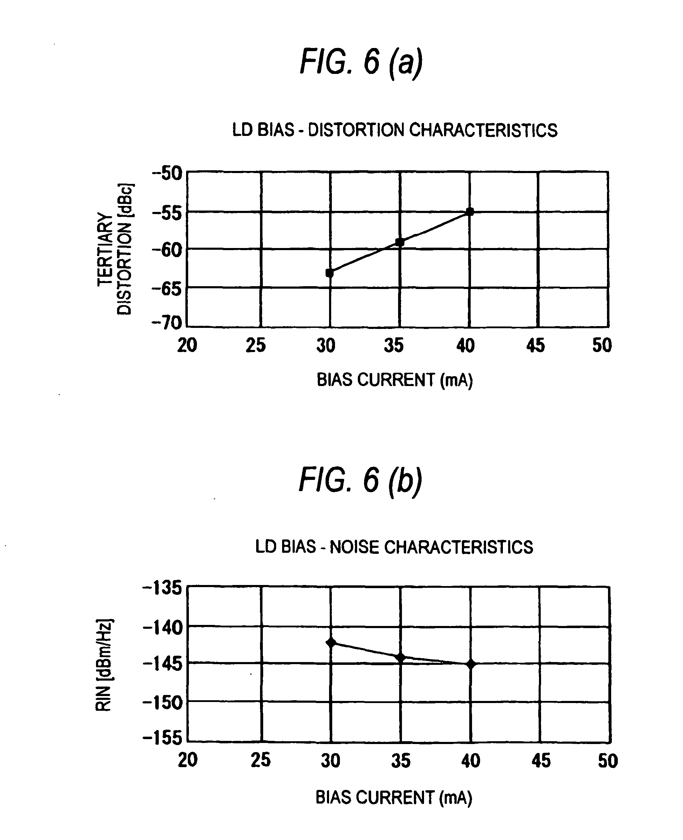

The efficiency of the laser diode depends on a bias current applied thereto. Fig. 6 is diagrams showing examples of the bias current characteristics of the laser diode. Fig. 6(a) shows an example of the bias current to distortion characteristics (mutual (tertiary) distortion characteristics) and Fig. 6(b) shows an example of the bias current to noise characteristics (RIN: Relative Intensity Noise characteristics).

As shown in Figs. 6(a) and 6 (b), the distortion characteristics tends to increase its distortion with the increase of the bias current applied to the diode, whilst the noise characteristics tends to decrease its noise with the increase of the bias current applied to the diode. Although the relative relations of the distortion characteristics and the noise characteristics with respect to the bias current may slightly differ from those of Figs. 6(a) and 6(b) depending on the kind of a laser diode, each laser diode has any kinds of the bias current dependency. Thus, it is preferable to improve the optical transmission characteristics by limiting the range of the bias current in accordance with the bias current dependency of the laser diode thereby to adjust the characteristics of the light source element.

However, in the coupling system shown in Fig. 5, the coupling efficiency varies actually due to the variation of the light converging position etc. from the lens 62 to the optical fiver 63. As a result, the level of the light emitted to the optical fiber 63 varies due to the variation of the light converging position etc. Thus, it is preferable to provide a constitution for absorbing the light emitting variety at the device on the receiving side. For example, a light attenuator is provided so as to absorb the variation at the front stage of the O/E converter 14a in the master station 10 or at the front stage of the O/E converter 21 in the slave station. Alternatively, the variation may be absorbed by the electric processing after converting the optical signal into the electrical signal.

Thus, since the light source element can be adjusted to have an optimum characteristic by providing a means for correcting the variation of light emission (the variation of light reception on the receiving side), the optical transmission with better quality can be realized.

According to the signal transmission system of the first embodiment of the invention, since the optical transmission is performed at the intermediate frequency band, the optical transmission characteristics is improved and the number of the slave stations to be coupled can be increased.

### (Second Exemplary Embodiment)

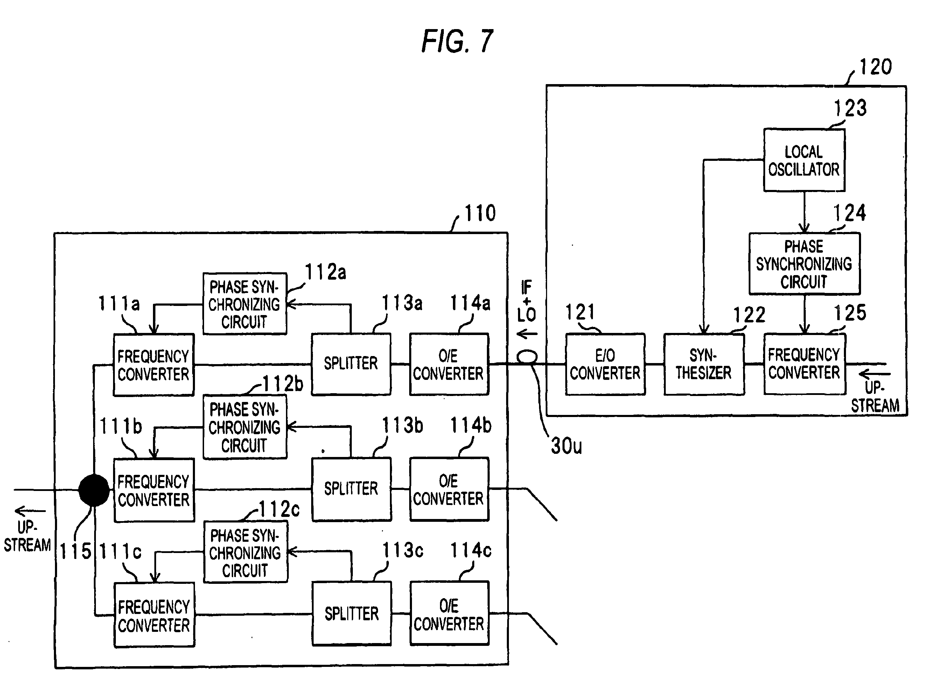

Fig. 7 is a schematic diagram showing the constitution of the up signal transmission systemof the signal transmission system for explaining a second exemplary embodiment of a signal transmission system. This embodiment will be exemplarily explained as to an antenna distribution system applied to a mobile communication system as the signal transmission system.

As shown in Fig. 7, the signal transmission system according to this embodiment includes a master station 110 and slave stations 120 coupled to the master station through optical transmission paths 30. The master station 110 transmits an up signal from the slave stations 120 to a base station. The slave station 120 has a function as an antenna station and serves to transmit an up signal from a mobile terminal to the master station 110.

The master station 110 includes frequency converters 111a to 111c, phase synchronizing circuits 112a to 112c, branching filters or splitters 113a to 113c, O/E converters 114a to 114c and a synthesizer 115.

Each of the O/E converters 114a to 114c converts an up optical signal, in which an intermediate frequency band from the slave station and a reference signal from a local oscillator 123 provided at the slave station 120 are multiplexed, into an electrical signal. The phase synchronizing circuits 112a to 112c input the signals from the local oscillators branched by the splitters 113a to 113c and obtain oscillator outputs synchronized with the input signals, respectively. The frequency converters 111a to 111c convert the up signals of the intermediate frequency band into radio frequency signals by using the oscillator outputs outputted from the phase synchronizing circuits 112a to 112c, respectively. The synthesizer 115 synthesizes the radio frequency signals frequency-converted by the frequency converters 111a to 111c.

The slave station 120 includes an E/O converter 121, a synthesizer 122, a local oscillator 123, a phase synchronizing circuit 124 and a frequency converter 125.

The E/O converter 121 converts an electrical signal outputted from the synthesizer 122 into an optical signal. The synthesizer 122 synthesizes the reference signal from the local oscillator 123 with the intermediate frequency signal generated by the frequency converter 125. The local oscillator 123 generates the reference signal of a predetermined frequency. The phase synchronizing circuit 124 inputs the reference signal from the local oscillator 123 and obtains an oscillator output synchronized with the input signal. The frequency converter 125 converts an up signal of the radio frequency band into a signal of the intermediate frequency band by using the oscillator output outputted from the phase synchronizing circuit 124.

In the case where the frequency of the reference signal is smaller than the radio frequency band width, for example, the frequency of the reference signal is 12. 8 MHz and the radio frequency band width is 20 MHz, when the reference signal is superimposed on the signal of the radio frequency band, there arises a problem that the secondary distortion component is generated within the transmission band of the radio frequency signal. In such a case, it is desirable to superimpose the reference signal on the radio frequency signal after frequency-converting the reference signal by a multiplier (not shown) etc. provided between the local oscillator 123 and the synthesizer 122. For example, the secondary harmonics (25.6 MHz) of the reference signal frequency may be superimposed on the radio frequency signal.

Thus, the frequency of the reference signal used in the frequency-conversion becomes common between the master station 110 and the slave stations 120. When the local oscillator is used separately in the master station and the slave station, since it is necessary to accurately coincide the frequencies of these reference signals from one another, it is required to provide the local oscillators with a high accuracy. On the other hand, according to the configuration of this embodiment, since the frequency of the reference signal is common between the master station and the slave stations, it is possible to prevent a problem due to a difference of the frequencies of the reference signals between the master station and the slave station.

This configuration has a problem that the number of the parts such as the local oscillators is larger as compared with the signal transmission system according to the embodiment shown in Fig. 1. However, since the up signal transmission system and the down signal transmission system are provided separately, the configuration of this embodiment is effective in a case where the independency of the up signal transmission system and the down signal transmission system is important.

The signal transmission system according to the invention has the effect that the number of the slave stations to be coupled can be increased with the simple configuration and is useful for the antenna system etc. of the mobile communication system etc.

## Claims

1. A master station for a signal transmission system which includes a plurality of slave stations (20) each intended for communication, wherein said master station is coupled to said plurality of slave stations (20) through optical transmission paths (30d, 30u), respectively, said master station **characterized by** comprising:
for each of said plurality of slave stations (20) coupled to the master station
an optical/electro converter (14a, 14b, 14c) for converting upstream optical signals received from the respective slave station (20) into electric signals in an intermediate frequency band, and
means (15a, 15b, 15c) for amplifying or attenuating said electrical signals output from the respective optical/electro converter (14a, 14b, 14c);
a combiner (17) for combining the electric upstream signals output from the plurality of amplifying or attenuating means (15a, 15b, 15c); and
a single frequency converter (18) for converting the combined electric upstream signal from said intermediate frequency band into a signal of a desired frequency band by using a reference signal (LO) of a predetermined frequency.

2. The master station according to claim 1, further comprising a reference signal generator (11), for generating the reference signal (LO).

3. The master station according to claim 2, wherein the reference signal generator (11) includes a signal generator for generating a signal of a first frequency and a reference signal frequency converter for converting the first frequency signal into the predetermined frequency signal.

4. The master station according to claim 1, further comprising a receiver, for receiving the reference signal from outside.

5. The master station according to one of claims 1 to 4, further comprising a first coupler (12), for frequency-multiplexing and coupling the reference signal (LO) with a downstream signal for the slave station (20).

6. The master station according to one of claims 1 to 4, further comprising:
a multiplier, for multiplying the reference signal (LO); and
a second coupler (12), for frequency-multiplexing the multiplied reference signal with a downstream signal for the slave station (20).

7. The master station according to one of claims 1 to 6, wherein the frequency converter (18) for converting the intermediate frequency band signal into the desired frequency band signal is disposed at a rear stage of the combiner (17) for combining the plurality of upstream signals.

8. The master station according to one of claims 1 to 7, further comprising:
for each of said plurality of slave stations (20) coupled to the master station
a detector, coupled to the respective optical/electro converter (14a, 14b, 14c) for detecting a signal level of the upstream electric signal; and
a gain controller (16a, 16b, 16c), coupled to the respective detector, for controlling the gain of the respective amplifying or attenuating means (15a, 15b, 15c) when the detector does not detect the upstream electric signal.

9. The master station according to claim 8, further comprising an abnormality detector, for recognizing that the slave station (20) is abnormal when the signal level of the upstream signal is detected but the upstream signal is not detected.

10. The master station according to one of claims 1 to 9, further comprising a corrector, for absorbing variation of a light reception level of the optical signal received from the optical transmission path (30u).

11. A signal transmission system including a plurality of slave stations (20) each intended for communication and a master station (10) according to any of claims 1 to 10, coupled to the plurality of slave stations (20) through optical transmission paths (30d, 30u), respectively, wherein each slave station (20) comprises.
a slave station frequency converter (26), for converting a received upstream signal into a signal of an intermediate frequency band; and
an electro/optical converter (27), for converting the upstream signal thus converted into the intermediate frequency band signal into an optical signal and outputting the optical signal to the master station (10).

12. A signal transmission method in a master station (10) for a signal transmission system which includes a plurality of slave stations (20) each intended for communication and the master station (10) coupled to the plurality of slave stations (20) through optical transmission paths (30d, 30u), respectively, comprising the steps of:
receiving upstream optical signals from the plurality of slave stations (20);
converting the received upstream optical signals into electrical signals of an intermediate frequency band;
amplifying or attenuating said electric signals output by said converting step;
combining the plurality of electric upstream signals corresponding to the plurality of slave stations (20); and
converting the combined electric upstream signal from the intermediate frequency band into a signal of a desired frequency band by using a reference signal (LO) of a predetermined frequency.

13. The method according to claim 12, further comprising the step of generating the reference signal (LO).

14. The method according to claim 13, wherein the step of generating the reference signal (LO) includes generating a signal of a first frequency and converting the first frequency signal into the predetermined frequency signal.

15. The method according to claim 12, further comprising the step of receiving the reference signal from outside.

16. The method according to one of claims 12 to 15, further comprising the steps of frequency-multiplexing and coupling the reference signal (LO) with a downstream signal for the slave station (20).

17. The method according to one of claims 12 to 15, further comprising the steps of
multiplying the reference signal (LO); and
frequency-multiplexing the multiplied reference signal with a downstream signal for the slave station (20).

18. The method according to one of claims 12 to 17, further comprising the steps of
detecting a signal level of the upstream electric signal in the intermediate frequency band; and
controlling the gain of the respective amplifying or attenuating step when the detecting step does not detect the upstream electric signal.

19. The method according to claim 18, further comprising the step of recognizing that the slave station (20) is abnormal when the signal level of the upstream signal is detected but the upstream signal is not detected.

20. The method according to one of claims 12 to 19, further comprising the step of absorbing variation of a light reception level of the optical signal received from the optical transmission path (30u).

21. A signal transmission method in a signal transmission system which includes a plurality of slave stations (20) each intended for communication and a master station (10) coupled to the plurality of slave stations (20) through optical transmission paths (30d, 30u), respectively, comprising the steps to be performed in the plurality of slave stations (20) of:
converting a received upstream signal into a signal of an intermediate frequency band; and
converting the upstream signal thus converted into the intermediate frequency band signal into an optical signal and outputting the optical signal to the master station (10);
and further comprising performing in the master station the steps according to any of claims 12 to 20.

## Patentansprüche

1. Master-Station für ein Signalsendesystem, das eine Vielzahl von Slave-Stationen (20) enthält, die jeweils zur Kommunikation bestimmt sind, wobei die Master-Station mit der Vielzahl von Slave-Stationen (20) jeweils über optische Sendewege (30d, 30u) verbunden ist und die Master-Station **dadurch gekennzeichnet ist, dass** sie umfasst:
für jede der Vielzahl von Slave-Stationen (20), die mit der Master-Station gekoppelt ist:
einen opto-elektrischen Wandler (14a, 14b, 14c) zum Umwandeln von der jeweiligen Slave-Station (20) empfangener optischer Upstream-Signale in elektrische Signale in einem Zwischenfrequenzband,
Einrichtungen (15a, 15b, 15c) zum Verstärken oder Abschwächen von dem jeweiligen opto-elektrischen Wandler (14a, 14b, 14c) ausgegebener elektrischer Signale;
einen Mischer (17) zum Mischen der von der Vielzahl verstärkender oder abschwächender Einrichtungen (15a, 15b, 15c) ausgegebenen elektrischen Upstream-Signale; und
einen einzelnen Frequenzwandler (18), der das gemischte elektrische Upstream-Signal unter Verwendung eines Bezugssignals (LO) einer vorgegebenen Frequenz von dem Zwischenfrequenzband in ein Signal eines gewünschten Frequenzbandes umwandelt.

2. Master-Station nach Anspruch 1, die des Weiteren einen Bezugssignal-Generator (11) zum Erzeugen des Bezugssignals (LO) umfasst.

3. Master-Station nach Anspruch 2, wobei der Bezugssignal-Generator (11) einen Signalgenerator zum Erzeugen eines Signals einer ersten Frequenz und einen Bezugssignal-Frequenzwandler zum Umwandeln des Signals der ersten Frequenz in das Signal der vorgegebenen Frequenz enthält.

4. Master-Station nach Anspruch 1, die des Weiteren einen Empfänger zum Empfangen des Bezugssignals von außen umfasst.

5. Master-Station nach einem der Ansprüche 1 bis 4, die des Weiteren einen ersten Koppler (12) zum Frequenz-Multiplexen und Koppeln des Bezugssignals (LO) mit einem Downstream-Signal für die Slave-Station (20) umfasst.

6. Master-Station nach einem der Ansprüche 1 bis 4, die des Weiteren umfasst:
einen Vervielfacher zum Vervielfachen des Bezugssignals (LO); und
einen zweiten Koppler (12) zum Frequenz-Multiplexen des vervielfachten Bezugssignals mit einem Downstream-Signal für die Slave-Station (20).

7. Master-Station nach einem der Ansprüche 1 bis 6, wobei der Frequenzwandler (18) zum Umwandeln des Zwischenfrequenzbandsignals in das Signal des gewünschten Frequenzbandes an einer hinteren Stufe des Mischers (17) zum Mischen der Vielzahl von Upstream-Signalen angeordnet ist.

8. Master-Station nach einem der Ansprüche 1 bis 7, die des Weiteren umfasst:
für jede der Vielzahl von Slave-Stationen (20), die mit der Master-Station gekoppelt sind:
einen Detektor, der mit dem jeweiligen opto-elektrischen Wandler (14a, 14b, 14c) gekoppelt ist, um einen Signalpegel des elektrischen Upstream-Signals zu erfassen; und
eine Verstärkungsfaktor-Steuereinheit (16a, 16b, 16c), die mit dem jeweiligen Detektor gekoppelt ist, um den Verstärkungsfaktor der jeweiligen verstärkenden oder abschwächenden Einrichtung (15a, 15b, 15c) zu steuern, wenn der Detektor das elektrische Upstream-Signal nicht erfasst.

9. Master-Station nach Anspruch 8, die des Weiteren einen Abnormalitäts-Detektor umfasst, der erkennt, dass die Slave-Station (20) abnormal ist, wenn der Signalpegel des Upstream-Signals erfasst wird, das Upstream-Signal jedoch nicht erfasst wird.

10. Master-Station nach einem der Ansprüche 1 bis 9, die des Weiteren eine Korrektureinrichtung zum Absorbieren von Schwankung eines Lichtempfangspegels des über den optischen Sendeweg (30u) empfangenen optischen Signals umfasst.

11. Signal-Sendesystem, das eine Vielzahl von Slave-Stationen (20), die jeweils für Kommunikation bestimmt sind, und eine Master-Station (10) nach einem der Ansprüche 1 bis 10 enthält, die mit der Vielzahl von Slave-Stationen (20) jeweils über optische Sendewege (30d, 30u) gekoppelt ist, wobei jede Slave-Station (20) umfasst:
einen Slave-Stations-Frequenzwandler (26) zum Umwandeln eines empfangenen Upstream-Signals in ein Signal eines Zwischenfrequenzbandes; und
einen elektro-optischen Wandler (27) zum Umwandeln des so in das Zwischenfrequenzbandsignal umgewandelten Upstream-Signals in ein optisches Signal und zum Ausgeben des optischen Signals an die Master-Station (10).

12. Signalsendeverfahren in einer Master-Station (10) für ein Signalsendesystem, das eine Vielzahl von Slave-Stationen (20), die jeweils für Kommunikation bestimmt sind, und die Master-Station (10) enthält, die mit der Vielzahl von Slave-Stationen (20) jeweils über optische Sendewege (30d, 30u) gekoppelt ist, wobei es die folgenden Schritte umfasst:
Empfangen optischer Upstream-Signale von der Vielzahl von Slave-Stationen (20);
Umwandeln der empfangenen optischen Upstream-Signale in elektrische Signale eines Zwischenfrequenzbandes;
Verstärken oder Abschwächen der von dem Umwandlungsschritt ausgegeben elektrischen Signale;
Mischen der Vielzahl elektrischer Upstream-Signale, die der Vielzahl von Slave-Stationen (20) entsprechen; und
Umwandeln des gemischten elektrischen Upstream-Signals von dem Zwischenfrequenzband in ein Signal eines gewünschten Frequenzbandes unter Verwendung eines Bezugssignals (LO) einer vorgegebenen Frequenz.

13. Verfahren nach Anspruch 12, das des Weiteren den Schritt des Erzeugens des Bezugssignals (LO) umfasst.

14. Verfahren nach Anspruch 13, wobei der Schritt des Erzeugens des Bezugssignals (LO) Erzeugen eines Signals einer ersten Frequenz und Umwandeln des Signals der ersten Frequenz in das Signal der vorgegebenen Frequenz einschließt.

15. Verfahren nach Anspruch 12, das des Weiteren den Schritt des Empfangens des Bezugssignals von außen umfasst.

16. Verfahren nach einem der Ansprüche 12 bis 15, das des Weiteren die Schritte des Frequenz-Multiplexierens und des Koppelns des Bezugssignals (LO) mit einem Downstream-Signal für die Slave-Station (20) umfasst.

17. Verfahren nach einem der Ansprüche 12 bis 15, das des Weiteren die folgenden Schritte umfasst:
Vervielfachen des Bezugssignals (LO); und
Frequenz-Multiplexen des vervielfachten Bezugssignals mit einem Downstream-Signal für die Slave-Station (20).

18. Verfahren nach einem der Ansprüche 12 bis 17, das des Weiteren die folgenden Schritte umfasst:
Erfassen eines Signalpegels des elektrischen Upstream-Signals in dem Zwischenfrequenzband; und
Steuern des Verstärkungsfaktors des Verstärkungs- bzw. Abschwächungsschrittes, wenn der Erfassungsschritt das elektrische Upstream-Signal nicht erfasst.

19. Verfahren nach Anspruch 18, das des Weiteren den Schritt umfasst, mit dem erkannt wird, dass die Slave-Station (20) abnormal ist, wenn der Signalpegel des Upstream-Signals erfasst wird, das Upstream-Signal jedoch nicht erfasst wird.

20. Verfahren nach einem der Ansprüche 12 bis 19, das des Weiteren den Schritt des Absorbierens von Schwankung eines Lichtempfangspegels des über den optischen Sendeweg (30u) empfangenen optischen Signals umfasst.

21. Signalsendeverfahren in einem Signalsendesystem, das eine Vielzahl von Slave-Stationen (20), die jeweils für Kommunikation bestimmt sind, und eine Master-Station (10) enthält, die mit der Vielzahl von Slave-Stationen (20) jeweils über optische Sendewege (30d, 30u) gekoppelt ist, wobei es die folgenden, in der Vielzahl von Slave-Stationen (20) durchzuführenden Schritte umfasst:
Umwandeln eines empfangenen Upstream-Signals in ein Signal eines Zwischenfrequenzbandes; und
Umwandeln des so in das Zwischenfrequenzbandsignal umgewandelten Upstream-Signals in ein optisches Signal und Ausgeben des optischen Signals an die Master-Station (10);
und das des Weiteren das Ausführen der Schritte nach einem der Ansprüche 12 bis 20 in der Master-Station umfasst.

## Revendications

1. Station maîtresse pour un système de transmission de signal qui comprend une pluralité de stations esclaves (20) destinées chacune à une communication, dans laquelle ladite station maîtresse est couplée à ladite pluralité de stations esclaves (20) par l'intermédiaire de chemins d'émission optique (30d, 30u), respectivement, ladite station maîtresse étant **caractérisée en ce qu'**elle comprend :
pour chacune de ladite pluralité de stations esclaves (20) couplées à la station maîtresse
un convertisseur optique/électrique (14a, 14b, 14c) servant à convertir des signaux optiques amont reçus en provenance de la station esclave respective (20) en signaux électriques dans une bande de fréquence intermédiaire ; et
des moyens (15a, 15b, 15c) pour amplifier ou affaiblir lesdits signaux électriques délivrés par le convertisseur optique/électrique respectif (14a, 14b, 14c) ;
un mélangeur (17) pour combiner les signaux électriques amont provenant de la pluralité de moyens d'amplification ou d'affaiblissement (15a, 15b, 15c) ; et
un seul convertisseur de fréquence (18) pour convertir le signal électrique amont combiné provenant de ladite bande de fréquence intermédiaire en un signal d'une bande de fréquence souhaitée en utilisant un signal de référence (LO) d'une fréquence prédéterminée.

2. Station maîtresse selon la revendication 1, comprenant en outre un générateur de signal de référence (11), pour générer le signal de référence (LO).

3. Station maîtresse selon la revendication 2, dans laquelle le générateur de signal de référence (11) comprend un générateur de signal pour générer un signal d'une première fréquence et un convertisseur de fréquence de signal de fréquence pour convertir le premier signal de fréquence en le signal de fréquence prédéterminée.

4. Station maîtresse selon la revendication 1, comprenant en outre un récepteur pour recevoir le signal de référence provenant de l'extérieur.

5. Station maîtresse selon l'une quelconque des revendications 1 à 4, comprenant en outre un premier coupleur (12), pour multiplexer en fréquence et coupler le signal de référence (LO) à un signal aval pour la station esclave (20).

6. Station maîtresse selon l'une quelconque des revendications 1 à 4, comprenant en outre :
un multiplieur pour multiplier le signal de référence (LO) ; et
un second coupleur (12), pour multiplexer en fréquence le signal de référence multiplié avec un signal aval pour la station esclave (20).

7. Station maîtresse selon l'une quelconque des revendications 1 à 6, dans laquelle le convertisseur de fréquence (18) pour convertir le signal de bande de fréquence intermédiaire en le signal de bande de fréquence souhaitée est placé à l'étage arrière du mélangeur (17) pour combiner la pluralité de signaux amont.

8. Station maîtresse selon l'une quelconque des revendications 1 à 7, comprenant en outre :
pour chacune de ladite pluralité de stations esclaves (20) couplées à la station maîtresse
un détecteur, couplé au convertisseur optique/électrique respectif (14a, 14b, 14c) pour détecter un niveau de signal du signal électrique amont ; et
un dispositif de commande de gain (16a, 16b, 16c), couplé au détecteur respectif, pour commander le gain du moyen d'amplification ou d'affaiblissement respectif (15a, 15b, 15c) lorsque le détecteur ne détecte pas le signal électrique amont.

9. Station maîtresse selon la revendication 8, comprenant en outre un détecteur d'anomalie, pour reconnaître que la station esclave (20) est anormale lorsque le niveau de signal du signal amont est détecté mais le signal amont n'est pas détecté.

10. Station maîtresse selon l'une quelconque des revendications 1 à 9, comprenant en outre un correcteur, pour absorber une variation d'un niveau de réception de lumière du signal optique reçu en provenance du chemin d'émission optique (30u).

11. Système de transmission de signal comprenant une pluralité de stations esclaves (20) destinées chacune à la communication et une station maîtresse (10) selon l'une quelconque des revendications 1 à 10, couplée à la pluralité de stations esclaves (20) par l'intermédiaire de chemins d'émission optique (30d, 30u), respectivement, dans lequel chaque station esclave (20) comprend :
un convertisseur de fréquence de station esclave (26) pour convertir un signal amont reçu en un signal d'une bande de fréquence intermédiaire ; et
un convertisseur électrique/optique (27), pour convertir le signal amont ainsi converti en le signal de bande de fréquence intermédiaire en un signal optique et délivrer le signal optique à la station maîtresse (10).

12. Procédé de transmission de signal dans une station maîtresse (10) pour un système de transmission de signal qui comprend une pluralité de stations esclaves (20) destinées chacune à la communication et la station maîtresse (10) couplée à la pluralité de stations esclaves (20) par l'intermédiaire de chemins d'émission optique (30d, 30u), respectivement, comprenant les étapes consistant à :
recevoir des signaux optiques amont provenant de la pluralité de stations esclaves (20) ;
convertir les signaux optiques amont reçus en signaux électriques d'une bande de fréquence intermédiaire ;
amplifier ou affaiblir lesdits signaux électriques produits en sortie par ladite étape de conversion ;
combiner la pluralité de signaux amont électriques correspondant à la pluralité de stations esclaves (20) ; et
convertir le signal amont électrique combiné provenant de ladite bande de fréquence intermédiaire en un signal d'une bande de fréquence souhaitée en utilisant un signal de référence (LO) d'une fréquence prédéterminée.

13. Procédé selon la revendication 12, comprenant en outre l'étape consistant à générer le signal de référence (LO).

14. Procédé selon la revendication 13, dans lequel l'étape consistant à générer le signal de référence (LO) comprend les étapes consistant à générer un signal d'une première fréquence et à convertir le signal de première fréquence en le signal de fréquence prédéterminée.

15. Procédé selon la revendication 12, comprenant en outre l'étape consistant à recevoir le signal de référence provenant de l'extérieur.

16. Procédé selon l'une quelconque des revendications 12 à 15, comprenant en outre les étapes consistant à multiplexer en fréquence et coupler le signal de référence (LO) à un signal aval pour la station esclave (20).

17. Procédé selon l'une quelconque des revendications 12 à 15, comprenant en outre les étapes consistant à
multiplier le signal de référence (LO) ; et
multiplexer en fréquence le signal de référence multiplié avec un signal aval pour la station esclave (20).

18. Procédé selon l'une quelconque des revendications 12 à 17, comprenant en outre les étapes consistant à
détecter un niveau de signal du signal électrique amont dans la bande de fréquence intermédiaire ; et
commander le gain de l'étape respective d'amplification ou d'affaiblissement lorsque l'étape de détection ne détecte pas le signal électrique amont.

19. Procédé selon la revendication 18, comprenant en outre l'étape consistant à reconnaître que la station esclave (20) est anormale lorsque le niveau de signal du signal amont est détecté mais le signal amont n'est pas détecté.

20. Procédé selon l'une quelconque des revendications 12 à 19, comprenant en outre l'étape consistant à absorber une variation d'un niveau de réception de lumière du signal optique reçu en provenance du chemin d'émission optique (30u).

21. Procédé de transmission de signal dans un système de transmission de signal qui comprend une pluralité de stations esclaves (20) destinées chacune à la communication et une station maîtresse (10) couplée à la pluralité des stations esclaves (20) par l'intermédiaire de chemins d'émission optique (30d, 30u), respectivement, comprenant les étapes devant être exécutées dans la pluralité de stations esclaves (20) consistant à :
convertir un signal amont reçu en un signal d'une bande de fréquence intermédiaire ; et
convertir le signal amont ainsi converti en le signal de bande de fréquence intermédiaire en un signal optique et délivrer en sortie le signal optique à la station maîtresse (10) ;
et comprenant en outre l'étape consistant à exécuter dans la station maîtresse les étapes selon l'une quelconque des revendications 12 à 20.
